# FASCICULE DE BREVET EUROPEEN

(11) **EP 0 524 106 B1**
(45) Date de publication et mention de la délivrance du brevet: **05.07.1995**
(21) Numéro de dépôt: 92402073.8
(22) Date de dépôt: 17.07.1992
(51) Int. Cl.: F21M 7/00, B60Q 1/04, F21Q 1/00

(54) **Dispositif d'éclairage ou de signalisation comportant plusieurs moyens de fixation interactifs**
Beleuchtungs- oder Signaleinrichtung mit mehreren aufeinanderwirkenden Befestigungsmitteln
Lighting or signalling assembly having several interacting mounting means

(30) Priorité: 19.07.1991 FR 9109153
(43) Date de publication de la demande: 20.01.1993
(73) Titulaire: VALEO VISION, 93012 Bobigny Cédex (FR)
(72) Inventeur: Pinson, Ghislaine, F-92390 Villeneuve-La-Garenne (FR)
(74) Mandataire: Martin, Jean-Jacques

(56) Documents cités:
- EP-A- 0 013 245
- FR-A- 2 379 759
- FR-A- 2 611 252

## Description

La présente invention a trait d'une façon générale aux dispositifs d'éclairage ou de signalisation notamment pour véhicules automobiles.

Certains de ces dispositifs, par exemple ceux représentés dans le document FR-A-2 611 252, et notamment des projecteurs anti-brouillard, comportent classiquement un miroir dans lequel est montée une lampe, un capot de protection situé à l'arrière du miroir, une glace frontale et un élément intermédiaire ou élément de style assurant la liaison mécanique entre le miroir et la glace. Avantageusement, un tel élément de style vise également à donner au projecteur,lorsqu'il est éteint, un aspect aussi homogène que possible, tout en évitant de perturber le faisceau formé.

On cherche actuellement à réaliser des projecteurs anti-brouillard de ce type en fabriquant un premier sous-ensemble, constitué par le capot et le miroir, qui soit identique pour un certain nombre de types de projecteurs différents. En revanche un second sous-ensemble constitué par l'élément intermédiaire et la glace a une conception adaptée au véhicule sur lequel le projecteur doit être monté.

Les avantages d'une telle approche sont nombreux: en particulier, par une diminution du nombre de pièces à référencer et par une simplification du stockage, on diminue le coût global de fabrication.

Un inconvénient de cette solution réside cependant dans la difficulté qui existe à obtenir, une fois l'assemblage des deux sous-ensembles réalisé, la possibilité de démonter simplement et rapidement seulement le capot du projecteur, en conservant l'intégrité de toutes les autres pièces, notamment dans le but de remplacer la lampe.

Un autre inconvénient de cette approche réside en ce que l'assemblage des deux sous-ensembles pour réaliser le projecteur final peut s'avérer complexe et coûteuse en temps.

La présente invention vise à résoudre ces inconvénients et à proposer, dans un dispositif d'éclairage ou de signalisation mentionné en introduction, des moyens de fixation entre les diverses pièces qui soient particulièrement simples et économiques à réaliser, qui permettent un assemblage extrêmement rapide et aisé des deux sous-ensembles et qui permettent ensuite un démontage et un remontage rapides et aisés du capot par rapport au reste du projecteur, conservant son intégrité.

Elle concerne à cet effet un dispositif d'éclairage ou de signalisation du type comprenant un miroir, un capot de fermeture prévu à l'arrière du miroir, une glace et un élément intermédiaire capable d'être relié au miroir et à la glace en s'étendant au moins partiellement entre le miroir et la glace, caractérisé en ce que le miroir et le capot, d'une part, et la glace et l'élément intermédiaire d'autre part, constituent initialement des sous-ensembles distincts, en ce qu'il est prévu des premiers moyens de fixation, libérables, entre le miroir et le capot, des deuxièmes moyens de fixation entre le miroir et l'élément intermédiaire, et des troisièmes moyens de fixation, manoeuvrables de l'extérieur du dispositif, entre le capot et l'élément intermédiaire, la mise en oeuvre des deuxièmes moyens de fixation provoquant l'assemblage des deux sous-ensembles et la libération des premiers moyens de fixation pour permettre ensuite de retirer seulement le capot du dispositif en opérant sur les troisièmes moyens de fixation.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue en coupe horizontale axiale partielle d'un projecteur selon l'invention, dans un état pré-assemblé,
la figure 2 est une vue analogue à la figure 1, le projecteur étant assemblé,
la figure 3 est une vue en coupe verticale axiale partielle du projecteur tel que représenté sur la figure 2,
la figure 4 est une vue analogue à la figure 3, dans un état démonté particulier, et
la figure 5 est une vue analogue à la figure 3 d'une variante de réalisation de l'invention.

On notera préliminairement que, d'une figure à l'autre, des éléments ou parties identiques ou similaires ont été désignés par les mêmes signes de référence.

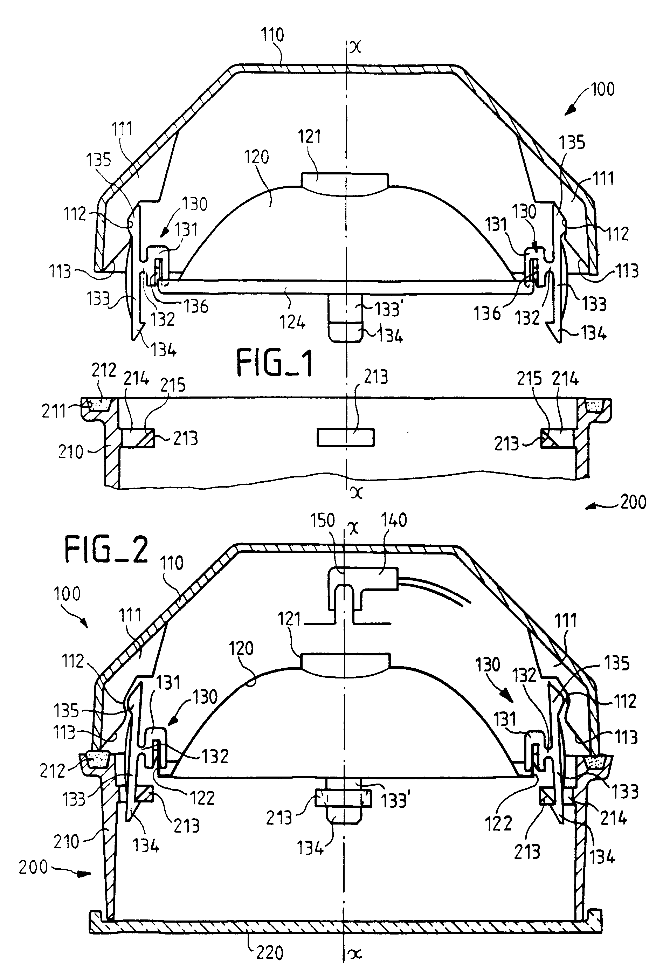

En référence tout d'abord aux figures 1 à 4, un dispositif d'éclairage ou de signalisation selon l'invention, en l'espèce un projecteur anti-brouillard destiné à être incorporé par exemple dans un bouclier avant de véhicule automobile, est constitué par deux sous-ensembles.

Un premier sous-ensemble 100 comprend un miroir 120, conçu pour coopérer avec une source lumineuse (non représentée) pour former un faisceau anti-brouillard, et un capot 110 situé à l'arrière du miroir et destiné, comme on le verra en détail plus loin, à fermer le projecteur.

Un second sous-ensemble 200 comprend une glace frontale 220, équipée si nécessaire de stries, prismes ou analogues destinés à ajuster le faisceau engendré par le miroir, et un élément intermédiaire 210 destiné à assurer la continuité physique du projecteur entre le miroir et la glace.

De façon préférée, en usine, on fabrique des capots et des miroirs standards pour un certain nombre de types de véhicules données, ce qui donne lieu à un type unique de premier sous-ensemble et donc avantageusement à une fabrication et à un stockage plus simples et donc de coût réduit.

Seuls l'élément intermédiaire 210, et le cas échéant la glace 220, présentent une conception adaptée en fonction de chaque type de véhicule.

Ainsi un projecteur destiné à un véhicule de type particulier sera réalisé en prélevant dans le stock un premier sous-ensemble standard et un second sous-ensemble adapté, séparés l'un de l'autre (figure 1) et qui doivent être assemblés l'un à l'autre (figure 2).

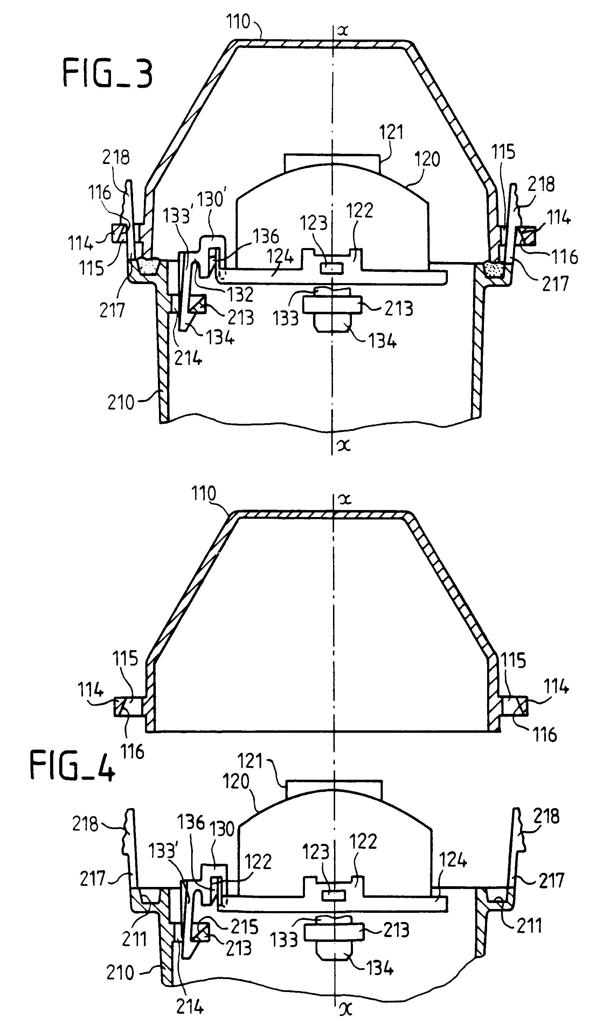

Le capot 110 comprend dans la région de son bord libre antérieur, et par exemple en deux régions opposées respectivement supérieure et inférieure situées à l'aplomb de l'axe x-x, deux ailes 114 dirigées vers l'extérieur et comportant chacune une ouverture traversante 115 dont une paroi extérieure est en forme de rampe 116, retrécissant l'ouverture 115 vers l'arrière (figures 3 et 4).

Le capot comporte en outre, à sa surface intérieure, deux membrures 111 situées de préférence dans un plan horizontal commun passant par l'axe x-x du projecteur. Chaque membrure comporte un renfoncement arrondi 112 et, entre ce renfoncement et le bord d'extrémité libre du capot, une rampe 113.

Le miroir 120, par exemple en tôle, comporte classiquement un trou de lampe délimité par une collerette 121. La lampe n'est pas représentée par souci de simplification; on a simplement représenté schématiquement sur la figure 2 une borne 150 de connexion de la lampe et un connecteur associé 140. Le bord d'extrémité antérieure du miroir est pourvu d'un rebord périphérique 124 dirigé vers l'arrière essentiellement parallèlement à x-x. En trois emplacements de ce rebord 124 sont prévus respectivement trois prolongements 122 dirigés vers l'arrière, dont un est particulièrement bien visible sur les figures 3 et 4. Chacun de ces prolongements est pourvu d'un trou traversant 123 de forme par exemple rectangulaire.

De façon préférée, on trouve deux prolongements 122 dans deux régions latéralement opposées du bord antérieur du miroir, et un prolongement 122 dans la région supérieure ou inférieure du miroir (en l'occurence la région inférieure), à l'aplomb de l'axe x-x.

Ces prolongements 122 à trous 123 sont destinés à la fixation permanente sur le miroir de trois éléments de fixation 130, 130′ que l'on va maintenant décrire.

Au niveau de chaque prolongement 122 situé latéralement (figures 1 et 2), on trouve un élément de fixation 130 qui comporte un corps en forme générale de "U" ouvert vers l'avant et comportant sur sa branche extérieure une dent 136 de section triangulaire qui, en venant s'engager élastiquement dans le trou 123 associé, assure la fixation de l'élément 130 sur le miroir.

Une branche 133 réalisée d'un seul tenant avec le corps de l'élément 130 est articulée élastiquement sur ledit corps par l'intermédiaire d'une partie de liaison 132 dont la section est choisie en fonction du matériau utilisé pour l'élément, de manière à assurer l'articulation élastique précitée.

Chaque branche 133 est approximativement rectiligne et s'étend vers l'avant et vers l'arrière à partir du point d'articulation 132.

L'extrémité arrière de chaque branche 133 présente un bossage 135 faisant saillie vers l'extérieur et dont la forme est essentiellement complémentaire de celle du renfoncement arrondi 112 de la membrure associée 111 du capot. A son extrémité avant, chaque branche 133 comporte une dent 134 de section générale triangulaire, comportant un décrochement vers l'intérieur essentiellement perpendiculairement à l'axe x-x.

L'élément de fixation 130′ situé sur le prolongement 122 du rebord 124 du miroir situé à l'aplomb de l'axe x-x est de conception légèrement différente: il comprend le même corps en "U" équipé d'une dent de verrouillage 136 et la même zone de liaison 132 formant articulation; en revannche, la branche, désignée par la référence 133′, s'étend à partir du point d'articulation 132 seulement vers l'avant, en comportant à son extrémité libre une dent 134 analogue à celles décrites en référence aux figures 1 et 2.

L'élément intermédiaire ou élément de style comprend un manchon 210 de section par exemple rectangulaire, destiné à assurer la liaison entre le premier sous-ensemble constitué par le miroir 120 et le capot 110 et la glace 220. Au niveau de son bord antérieur, l'élément 210 est fixé de façon permanente à la glace 220 par tout moyen classique approprié, non illustré.

Au niveau de son bord postérieur, l'élément 210 comporte une gorge périphérique 211 dans laquelle est reçu un joint d'étanchéité 212.

A une faible distance dudit bord postérieur, l'élément 210 comporte trois ailes 213 faisant saillie radialement vers l'intérieur et disposées dans des emplacements correspondant aux branches 133, 133′ et à leurs dents 134, c'est-à-dire en deux emplacements latéraux opposés et dans la région inférieure du manchon à l'aplomb de l'axe x-x.

Chaque aile 213 comporte un trou traversant 214 bordé vers l'intérieur par une paroi 215 en forme de rampe (figure 1), qui retrécit le trou 214 de l'arrière vers l'avant.

Par ailleurs, l'élément intermédiaire 210 comprend, s'étendant vers l'arrière à partir de la région extérieure de son bord postérieur, deux pattes souples 217 portant chacune à son extrémité libre une dent 218, de profil général par exemple rectangulaire, définissant un décrochement vers l'extérieur essentiellement perpendiculairement à x-x. Comme on l'observe, chaque dent 218 comporte sur sa surface extérieure des nervures ou analogues facilitant comme on le verra plus loin une sollicitation manuelle des pattes 217.

On va maintenant décrire l'utilisation et le comportement du projecteur décrit ci-dessus.

Tout d'abord, le premier sous-ensemble 100 est obtenu par simple rapprochement du capot et du miroir approximativement selon la direction de l'axe x-x, les bossages 135 glissant sur les rampes 113 et venant s'engager, grâce au rappel élastique assuré par les points d'articulation des branches 133, dans leurs renfoncements associés 112. C'est de préférence sous cette forme pré-assemblée que le capot et le miroir sont stockés, le capot tenant lieu alors avantageusement de protection du miroir.

Le premier sous-ensemble 100 et le second sous-ensemble 200 sont deux composants séparés du projecteur (figure 1), qu'il est nécessaire d'assembler pour réaliser le projecteur final.

On notera ici que le capot 110 permet avantageusement de protéger le miroir 120 lors du stockage des premiers sous-ensembles 100.

Pour fixer l'un à l'autre les deux sous-ensembles 100 et 200, on les rapproche l'un de l'autre parallèlement à l'axe x-x. Les dents 134 des éléments de fixation 130, 130′ commencent à s'engager dans les trous 214 formés dans les ailes 213 de l'élément intermédiaire 210 et, au cours de ce mouvement, les rampes 215 desdits trous 214 provoquent l'écartement des dents 134 et le pivotement élastique des branches 133, 133′ autour de leur point d'articulation 132 respectif. On comprend que, par ce mouvement de pivotement, les bossages 135 prévus aux extrémités arrière des branches 133 se déplacent vers l'intérieur et se dégagent de leurs renfoncements respectifs 112. En d'autres termes, les premiers moyens de fixation précités sont libérés par la mise en oeuvre même des seconds moyens de fixation constitués par les dents 134 et les trous 214 des pattes 213 et agissant entre le miroir 120 et l'élément intermédiaire 210.

A la fin du mouvement précité, les dents 134 s'encliquettent par leur décrochement sur la paroi avant des ailes 213, et la fixation du second sous-ensemble sur le premier sous-ensemble, de façon pratiquement indémontable de l'extérieur, est assurée.

Par ailleurs, pendant que les dents 134 s'engageaient dans les trous 214, les dents 218 solidaires de l'élément intermédiaire 210 s'engageaient dans les trous 115 formés dans les ailes 114 du capot 110. Et de la même manière, à la fin du mouvement d'assemblage, les dents 218 s'encliquettent en arrière des pattes 114, grâce à la flexion élastique des pattes 217. Il s'agit là de troisièmes moyens de fixation, opérant entre le capot 110 et l'élément intermédiaire 210.

On observe par ailleurs qu'au cours du mouvement d'assemblage, le bord antérieur du capot 110 vient comprimer dans une mesure appropriée le joint d'étanchéité 212, de telle sorte que le capot 110, l'élément intermédiaire 210 et la glace 220 définissent un espace intérieur essentiellement étanche du projecteur.

En résumé, l'assemblage des deux sous-ensembles 100 et 200 du projecteur provoque simultanément ou pratiquement simultanément:
- la mise en oeuvre des seconds moyens de fixation entre le miroir et l'élément intermédiaire, par l'encliquetage des dents 134 dans les ouvertures 214,
- par cette mise en oeuvre même, la libération des premiers moyens de fixation entre le capot et le miroir, qui maintenaient jusqu'alors ces deux pièces pré-assemblées, et
- la mise en oeuvre des troisièmes moyens de fixation qui assurent la fixation du capot 110, maintenant libéré du miroir 120, sur l'élément intermédiaire 210.

Et à l'issue de cet assemblage, lorsque l'utilisateur souhaite intervenir sur le projecteur, par exemple pour le remplacement de la lampe, le capot 110 peut être aisément démonté du reste du projecteur, par exemple grâce à une pression exercée manuellement par l'opérateur sur les dents opposées 218 pour les rapprocher l'une de l'autre, l'intégrité du projecteur n'étant alors rompue en aucune autre manière.

Ainsi l'assemblage du projecteur provoque en quelque sorte le transfert du miroir du capot sur l'élément intermédiaire, sur lequel il est maintenant fixé de façon indémontable de l'extérieur, le capot pouvant être alors démonté manuellement du nouveau sous-ensemble constitué par le miroir 120, l'élément intermédiaire 210 et la glace 220.

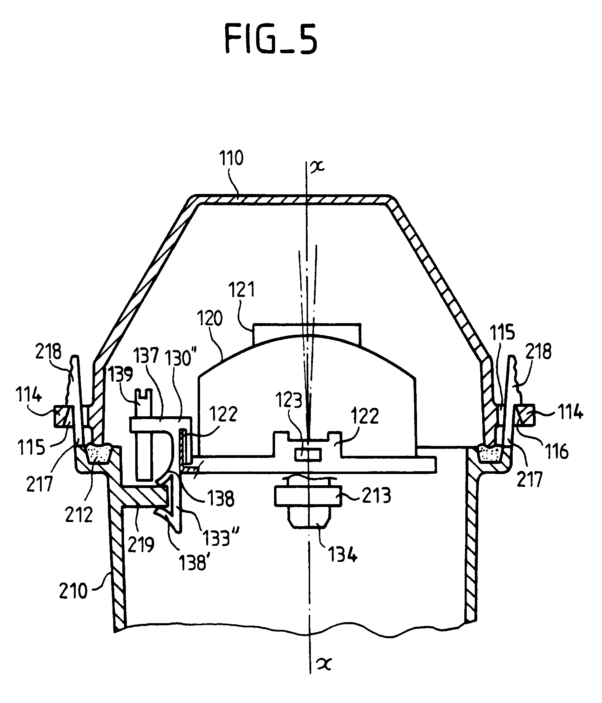

Dans la description qui précède, le miroir 120, après assemblage, est monté fixe sur l'élément intermédiaire 210. On va maintenant décrire en référence à la figure 5 une variante de réalisation dans laquelle le miroir peut être basculé pour régler l'orientation en site du faisceau engendré par le projecteur.

Les points de fixation latéraux du miroir 120 sur l'élément intermédiaire 210 sont réalisés comme décrit précédemment, les diverses parties étant toutefois conçues pour qu'au niveau de ces points de fixation, le miroir ait la liberté de basculer dans un intervalle angulaire limité autour d'un axe horizontal passant au voisinage des deux dents 134.

En revanche le point de fixation défini par l'élément 130′ est ici remplacé par un point de fixation à position variable défini par un élément 130''. Plus précisément, l'élément 130'' comporte un corps de fixation en "U" 131. A partir de la région postérieure de ce corps s'étend vers l'extérieur une aile 137 dans laquelle est formé un trou taraudé dans lequel est engagée une tige filetée 139. L'extrémité postérieure de cette tige comporte avantageusement une encoche pour l'engagement d'un tournevis.

La banche extérieure du corps en "U" 131 est prolongée vers l'avant sous forme d'une patte 133''. A partir de cette patte font saillie vers l'extérieur deux languettes souples 138, 138′ qui sont de préférence légèrement incurvées et orientées en oblique de manière à se rapprocher l'une de l'autre de l'intérieur vers l'extérieur.

En association avec cette construction, une aile 219 est formée en saillie vers l'intérieur à partir de la région du bord postérieur de l'élément intermédiaire 210 et présente une surface arrière essentiellement plane sur laquelle s'appuie l'extrémité antérieure de la tige filetée 139.

Les deux languettes 138, 138′ permettent un mouvement relatif, essentiellement parallèlement à l'axe x-x, de l'élément 130'' et de la patte 219, la languette anntérieure 138′ appliquant à ladite patte une sollicitation élastique vers l'arrière de manière à la maintenir appliquée contre la tige filetée 139.

Lors de l'assemblage des deux sous-ensembles du projecteur, la surface antérieure de la languette 138′ forme une rampe contre laquelle l'extrémité intérieure de la patte 219 jusqu'à ce qu'elle vienne s'encliqueter étroitement entre les deux pattes 138, 138′.

Lorsque l'on fait tourner la tige filetée 139 à l'aide d'un tournevis, on fait varier la distance entre l'aile 137 et la patte 219, et l'on modifie par conséquent l'orientation de l'axe x-x du miroir 120 par le fait que ce décalage induit une rotation du miroir autour de l'axe horizontal précité.

Bien entendu, on peut également modifier le projecteur pour prévoir un réglage d'orientation du faisceau en azimut.

La présente invention n'est nullement limitée à la forme de réalisation décrite ci-dessus et représentée sur les dessins, mais l'homme de l'art saura y apporter toute variante ou modification comprise dans le cadre des revendications.

En particulier, l'invention peut être avantageusement. utilisé dans tout dispositif d'éclairage ou de signalisation avant ou arrière pour véhicule. A cet égard, les expressions "avant", "arrière" et analogues utilisées dans la description qui précèdent sont à considérer dans un sens relatif, par rapport à la direction d'émission de la lumière et non par rapport à la direction d'avance du véhicule.

Par ailleurs, bien que l'on ait envisagé tout au long de la description le cas où le dispositif comprend deux sous-ensembles dont le second est constitué par l'élément intermédiaire et la glace, l'invention s'applique également au cas où l'élément intermédiaire et la glace constituent, avant l'assemblage, deux pièces séparées, définissant alors des deuxième et troisième sous-ensembles.

## Revendications

1. Dispositif d'éclairage ou de signalisation, notamment pour véhicule automobile, du type comprenant un miroir (120), un capot de fermeture (110) prévu à l'arrière du miroir, une glace (220) et un élément intermédiaire (210) capable d'être relié au miroir et à la glace en s'étendant au moins partiellement entre le miroir et la glace, caractérisé en ce que le miroir et le capot, d'une part, et la glace et l'élément intermédiaire d'autre part, constituent initialement des sous-ensembles distincts (100, 200), en ce qu'il est prévu des premiers moyens de fixation (112, 135), libérables, entre le miroir et le capot, des deuxièmes moyens de fixation (134, 213) entre le miroir et l'élément intermédiaire, et des troisièmes moyens de fixation (218, 114), manoeuvrables de l'extérieur du dispositif, entre le capot et l'élément intermédiaire, la mise en oeuvre des deuxièmes moyens de fixation provoquant l'assemblage des deux sous-ensembles et la libération des premiers moyens de fixation pour permettre ensuite de retirer seulement le capot du dispositif en opérant sur les troisièmes moyens de fixation.

2. Dispositif selon la revendication 1, caractérisé en ce que les premiers (135, 112) et deuxièmes (134, 213) moyens de fixation sont prévus dans un espace intérieur défini par le capot (110) et l'élément intermédiaire (210) et en ce que les troisièmes moyens de fixation (218, 114) sont manoeuvrables de l'extérieur dudit espace.

3. Dispositif selon la revendication 1 ou 2, caractérisé en ce qu'il comprend au moins un organe (133) solidaire du miroir et susceptible de présenter un degré de liberté en mouvement par rapport au miroir, dont une première région (135) fait partie des premiers moyens de fixation et dont une deuxième région (134) fait partie des deuxièmes moyens de fixation, la mise en oeuvre des deuxièmes moyens de fixation provoquant le déplacement du ou des organes pour la libération des premiers moyens de fixation.

4. Dispositif selon la revendication 3, caractérisé en ce que ledit organe au moins prévu comprend une branche (133) articulée sur un bord du miroir.

5. Dispositif selon la revendication 4, caractérisé en ce que la première région de la ou chaque branche (133) comprend un bossage (135) apte à coopérer avec un renfoncement complémentaire (112) formé dans le capot, la mise en oeuvre des deuxièmes moyens de fixation amenant le ou chaque bossage (135) à se dégager de son renfoncement.

6. Dispositif selon la revendication 5, caractérisé en ce qu'il est prévu sur le capot (110) à proximité du ou de chaque renfoncement (112) des premiers moyens à rampe (113) permettant l'engagement du ou de chaque bossage (135) dans son renfoncement (112) par simple rapprochement du miroir et du capot.

7. Dispositif selon la revendication 5 ou 6, caractérisé en ce que la seconde région de la ou de chaque branche (133) comprend une dent (134) et en ce qu'il est prévu sur l'élément intermédiaire des moyens à rampe (215) capables de provoquer le pivotement de la ou de chaque branche en agissant sur la ou chaque dent lors de la mise en oeuvre des deuxièmes moyens de fixation.

8. Dispositif selon la revendication 7, caractérisé en ce que les moyens à rampe (215) sont disposés à proximité d'au moins une ouverture (214) dans laquelle la ou chaque dent est encliquetée lors de la mise en oeuvre des deuxièmes moyens de fixation.

9. Dispositif selon l'une des revendications 1 à 8, caractérisé en ce que les deuxièmes moyens de fixation sont mis en oeuvre en une pluralité de points de fixation et en ce qu'il est prévu des moyens de réglage (139) de la position d'au moins un point de fixation pour modifier l'orientation du miroir (120).

10. Dispositif selon la revendication 9, caractérisé en ce que les moyens de réglage comprennent une tige filetée (139) traversant un trou taraudé formé dans une pièce (130˝) solidaire du miroir (120) et s'appuyant contre une surface (219) solidaire de l'élément intermédiaire (210) à l'aide de moyens de rappel élastique (138′) agissant entre le miroir et l'élément intermédiaire.

11. Dispositif selon la revendication 10, caractérisé en ce que les moyens de réglage (139) sont prévus dans l'espace intérieur défini par le capot et l'élément intermédiaire.

12. Dispositif selon l'une des revendications 9 à 11 rattachées à la revendication 3, caractérisé en ce qu'il est prévu deux branches articulées (133) situées à la même hauteur dans deux régions latérales du dispositif d'éclairage et en ce que le point de fixation dont la position est réglable est situé à une certaine distance au-dessus ou au-dessous des deux branches, de manière à permettre un réglage en site de l'orientation du miroir.

13. Dispositif selon l'une des revendications 1 à 12, caractérisé en ce que les troisièmes moyens de fixation comprennent au moins une patte souple (217) comportant une dent (218) à une extrémité libre et au moins une ouverture (115) associée dans laquelle est encliquetée la dent.

14. Dispositif selon la revendication 13, caractérisé en ce qu'il est prévu deux pattes souples (217) solidaires de l'élément intermédiaire dans deux régions opposées de celui-ci et deux ouvertures associées (115) formées dans deux ailes (114) solidaires du capot, la libération des troisièmes moyens de fixation s'effectuant par une sollicitation manuelle rapprochant les dents l'une de l'autre.

## Claims

1. A signalling or lighting device, particularly for a motor vehicle, the device being of the type comprising a mirror (120), a closure cap (110) provided behind the mirror, a glass (220), and an intermediate element (210) capable of being connected to the mirror and to the glass and extending at least part of the way between the mirror and the glass, the device being characterized in that initially the mirror and the cap, and also the glass and the intermediate element constitute respective distinct subassemblies (100, 200), in that releasable first fixing means (112, 135) are provided between the mirror and the cap, second fixing means (134, 213) are provided between the mirror and the intermediate element, and third fixing means (218, 114) operable from outside the device are provided between the cap and the intermediate element, operation of the second fixing means causing the two subassemblies to be assembled together and releasing the first fixing means to enable the cap subsequently to be withdrawn on its own from the device by acting on the third fixing means.

2. A device according to claim 1, characterized in that the first and second fixing means (135, 112; 134, 213) are provided in an inside space defined by the cap (110) and the intermediate element (210), and in that the third fixing means (218, 114) are operable from outside said space.

3. A device according to claim 1 or 2, characterized in that it includes at least one member (133) secured to the mirror and capable of presenting a degree of freedom of movement relative to the mirror, a first region thereof (135) forming a portion of the first fixing means, and a second region thereof (134) forming a portion of the second fixing means, operation of the second fixing means causing the member(s) to be displaced to release the first fixing means.

4. A device according to claim 3, characterized in that said at least one member includes a branch (133) hinged on a side of the mirror.

5. A device according to claim 4, characterized in that the first region of the, or each, branch (133) includes a projection (135) suitable for co-operating with a complementary reinforcement (112) formed in the cap, operation of the second fixing means causing the, or each, projection (135) to disengage from its reinforcement.

6. A device according to claim 5, characterized in that first ramp means (113) are provided on the cap (110) in the proximity of the, or each, reinforcement (112), thereby enabling the, or each, projection (135) to be engaged in its reinforcement (112) merely by moving the mirror and the cap towards each other.

7. A device according to claim 5 or 6, characterized in that the second region of the, or each, branch (133) includes a tooth (134), and in that ramp means (215) are provided on the intermediate element capable of causing the, or each, branch to pivot by acting on the, or each, tooth while the second fixing means are being operated.

8. A device according to claim 7, characterized in that the ramp means (215) are disposed in the proximity of at least one opening (214) in which the, or each, tooth is snap-fastened when operating the second fixing means.

9. A device according to any one of claims 1 to 8, characterized in that the second fixing means are implemented at a plurality of fixing points, and in that adjustment means (139) are provided for adjusting the position of at least one fixing point to modify the orientation of the mirror (120).

10. A device according to claim 9, characterized in that the adjustment means comprise a threaded rod (139) passing through a tapped hole formed in a part (130'') secured to the mirror (120) and bearing against a surface (219) secured to the intermediate element (210) by resilient return means (138') acting between the mirror and the intermediate element.

11. A device according to claim 10, characterized in that the adjustment means (139) are provided in the inside space defined by the cap and the intermediate element.

12. A device according to any one of claims 9 to 11, as dependent on claim 3, characterized in that two hinged branches (133) are provided situated at the same height in two lateral regions of the lighting device, and in that the fixing point of adjustable position is situated at a certain distance above or below the two branches so as to enable the orientation of the mirror to be adjusted in elevation.

13. A device according to any one of claims 1 to 12, characterized in that the third fixing means include at least one flexible tab (217) including a tooth (218) at a free end, and at least one associated opening (115) in which the tooth is snap-fastened.

14. A device according to claim 13, characterized in that two flexible tabs (217) are provided secured to the intermediate element in two opposite regions thereof, and two associated openings (115) are formed in two lugs (114) secured to the cap, the third fixing means being released by acting manually to move the teeth towards each other.

## Patentansprüche

1. Beleuchtungs- oder Signalvorrichtung, insbesondere für Kraftfahrzeuge der Bauart, die einen Reflektor (120), eine hinter dem Reflektor vorgesehene Verschlußhaube (110), eine Scheibe (220) und ein Zwischenteil (210) umfaßt, das dazu geeignet ist, mit dem Reflektor und der Scheibe verbunden zu werden, wobei es sich wenigstens teilweise zwischen dem Reflektor und der Scheibe erstreckt, **dadurch gekennzeichnet**, daß der Reflektor und die Haube einerseits und die Scheibe und das Zwischenteil andererseits anfänglich unabhängige Untereinheiten (100, 200) darstellen, daß erste lösbare Befestigungsmittel (112, 135) zwischen dem Reflektor und der Haube, zweite Befestigungsmittel (134, 213) zwischen dem Reflektor und dem Zwischenteil und dritte von außerhalb der Vorrichtung betätigbare Befestigungsmittel (218, 114) zwischen der Haube und dem Zwischenteil vorgesehen sind, wobei das Betätigen der zweiten Befestigungsmittel zu einer Verbindung der beiden Untereinheiten führt, und das Lösen der ersten Befestigungsmittel bewirkt danach durch Betätigen der dritten Befestigungsmittel, daß so nur die Haube der Vorrichtung abgenommen werden kann.

2. Vorrichtung nach Anspruch 1, **dadurch gekennzeichnet,** daß die ersten (135, 112) und die zweiten (134, 213) Befestigungsmittel in einem von der Haube (110) und dem Zwischenteil (210) definierten Innenraum vorgesehen sind und daß die dritten Befestigungsmittel (218, 114) von außerhalb des oben genannten Raums betätigbar sind.

3. Vorrichtung nach Anspruch 1 oder 2, **dadurch gekennzeichnet,** daß sie wenigstens eine Einrichtung (133) umfaßt, deren erster Bereich (135) zu den ersten Befestigungsmitteln gehört und ein zweiter Bereich (134) zu den zweiten Befestigungsmitteln gehört und die mit dem Reflektor verbunden ist und dazu geeignet ist, ein Maß an Bewegungsfreiheit in Bezug auf den Reflektor zu ermöglichen, wobei das Betätigen der zweiten Befestigungsmittel die Verlagerung der Vorrichtung oder Vorrichtungen für die Lösung der ersten Befestigungsmittel bewirkt.

4. Vorrichtung nach Anspruch 3, **dadurch gekennzeichnet,** daß die wenigstens eine Einrichtung einen auf einem Rand des Reflektors angelenkten Abschnitt (133) umfaßt.

5. Vorrichtung nach Anspruch 4, **dadurch gekennzeichnet,** daß der erste Bereich von dem oder von jedem Abschnitt (133) einen Buckel (135) aufweist, der in die komplementäre Vertiefung (112) paßt, die in der Haube ausgebildet ist, wobei das Betätigen der zweiten Befestigungsmittel den oder jeden Buckel (135) dazu bringt, sich aus seiner Vertiefung zu befreien.

6. Vorrichtung nach Anspruch 5, **dadurch gekennzeichnet,** daß auf der Haube (110) in der Nähe der oder jeder Vertiefung (112) erste rampenartige Mittel (113) vorgesehen sind, die das Einrücken des oder jedes Buckels (135) in seine Vertiefung (112) durch einfaches Zusammenbringen des Reflektors und der Haube ermöglichen.

7. Vorrichtung nach Anspruch 5 oder 6, **dadurch gekennzeichnet,** daß der zweite Bereich des oder jedes Abschnitts (133) mit einem Zahn (134) versehen ist und daß auf dem Zwischenteil rampenartige Mittel (215) vorgesehen sind, die das Schwenken des oder jedes Abschnitts herbeiführen können, indem sie auf den oder jeden Zahn während des Betätigens der zweiten Befestigungsmittel einwirken.

8. Vorrichtung nach Anspruch 7, **dadurch gekennzeichnet,** daß die rampenartigen Mittel (215) in der Nähe von wenigstens einer Öffnung (214), in die der oder jeder Zahn während der Betätigung der zweiten Befestigungsmittel eingreift.

9. Vorrichtung nach einem der Ansprüche 1 bis 8, **dadurch gekennzeichnet,** daß die zweiten Befestigungsmittel an einer Vielzahl von Befestigungspunkten zum Einsatz kommen und daß Einstellvorrichtungen (139) vorgesehen sind, die die Position von wenigstens einem Befestigungspunkt zur Einstellung des Reflektors (120) regeln.

10. Vorrichtung nach Anspruch 9, **dadurch gekennzeichnet,** daß die Einstellvorrichtungen eine Gewindestange (139) umfassen die durch eine mit einem Gewinde versehene Bohrung führt, die sich in einem mit dem Reflektor (120) verbundenen Teil (130'') befindet und auf einer Fläche (219) aufliegt, die mit dem Zwischenteil (210) mit Hilfe von elastischen Rückstellvorrichtungen (138'), die zwischen dem Reflektor und dem Zwischenteil wirksam werden, verbunden ist.

11. Vorrichtung nach Anspruch 10, **dadurch gekennzeichnet,** daß die Justiervorrichtungen (139) in dem durch die Haube und dem Zwischenteil definierten Innenraum vorgesehen sind.

12. Vorrichtung nach einem der Ansprüche 9 bis 11, soweit diese auf den Anspruch 3 zurückbezogen sind, **dadurch gekennzeichnet,** daß zwei beweglich angebrachte Abschnitte (133) vorgesehen sind, die sich auf gleicher Höhe in zwei seitlichen Bereichen der Beleuchtungsvorrichtung befinden und daß sich der Befestigungspunkt, dessen Position einstellbar ist, in gewissem Abstand oberhalb oder unterhalb der beiden Abschnitt befindet, so daß eine unmittelbare Einstellung der Position des Reflektors möglich ist.

13. Vorrichtung nach einem der Ansprüche 1 bis 12, **dadurch gekennzeichnet,** daß die dritten Befestigungsmittel wenigstens eine flexible Lasche (217) umfassen, die an einem freien Ende einen Zahn (218) und wenigstens eine entsprechende Öffnung (115) aufweist, in die der Zahn eingreift.

14. Vorrichtung nach Anspruch 13, **dadurch gekennzeichnet,** daß zwei flexible Laschen (217), die mit dem Zwischenteil in zwei von dem letzteren entgegengesetzen Richtungen verbunden sind, sowie zwei zugehörige Öffnungen (115), die sich in zwei mit der Haube verbundenen Überständen (114) befinden, vorgesehen sind, wobei die Lösung der dritten Befestigungsmittel durch manuelle Betätigung erfolgt, wodurch die Zähne miteinander in Verbindung gebracht werden.
